# EUROPEAN PATENT APPLICATION

(11) **EP 2 108 900 A1**
(43) Date of publication of application: **14.10.2009**
(21) Application number: 08425227.9
(22) Date of filing: 07.04.2008
(51) Int. Cl.: F24J 2/54

(54) **Sun follower**

(71) Applicant: Costantino Ferdinado Ponziano C.E.M. S.r.l., 71100 Foggia (FG) (IT)
(72) Inventor: Costantino Ferdinado Ponziano C.E.M. S.r.l., 71100 Foggia (FG) (IT)
(74) Representative: Germinario, Claudio

(57) **Abstract**

The present invention refers to a sun follower (1). The sun follower (1) according to the present invention has a weight and an off-ground height remarkably lower with respect to other followers known in the current state of the art, entailing greater ease of installation and a reduced environmental impact, in conjunction with reasonable costs.

## Description

The present invention refers to a sun follower (also known as solar tracker); therefore, it finds application in the field of the exploitation of clean energy sources. As it is widely known in the current state of the art, a sun follower is a mechanical device apt to favourably orient toward rays of the Sun a frame on which one or more solar panels for thermal or photovoltaic use are positioned. The plane on which the device is anchored is generally referred to as "land surface".

The main aim of such a device is to maximize the energy conversion efficiency of solar panels mounted thereon.

Usually, in the photovoltaic field the panels moved by the device are mounted on a single frame, so as to avoid the use of one sun follower for each individual panel.

Sun constitutes a spherical energy source producing a radial beam of rays; yet, since it lies at a great distance from the panels, it may be assumed that the rays impinging on the latter are substantially parallel thereamong. Hence, the longer the sun rays remain perpendicular with respect to the panels, the greater, accordingly, the energy produced in the conversion process.

As it is known, the great circle of the celestial sphere traced out by the Sun in its apparent path around Earth during the year is defined as "ecliptic". The geometrical plane onto which the ecliptic lies is referred to as "ecliptic plane". Hence, in order to attain maximum efficiency in sun ray absorption, the panel should be positioned perpendicularly to the ecliptic plane all year long, and moreover it should carry out the Sun following in the East-West direction, due to the Earth's daily rotation about its own axis.

To date, known sun followers substantially differentiate into two typologies: single-axis sun followers and dual-axis sun followers having a "sail".

A single-axis follower operates, as to the alignment of the frame to the ecliptic plane, on the basis of the principle of availability of a fixed or manually variable angle, whereas the Sun following in the East-West direction is automated by means of a motor.

A "sail" dual-axis sun follower instead follows the Sun through an East-West tracking system obtained by rotating the follower about a longitudinal axis perpendicular to the land surface, whereas the panel plane rotates, on a transversal axis, of an angle positioning it perpendicularly to the ecliptic plane.

Both of the above-highlighted known solutions entail advantages as well as drawbacks with respect to each other.

In particular, single-axis followers entail lower costs, but are characterized by a low efficiency increase value with respect to fixed-configuration panels.

On the other hand, dual-axis followers exhibit a high value of efficiency increase with respect to fixed configurations, yet are affected by several evident drawbacks.

In fact, in dual-axis followers the structure weight, generally no lower than 400 kg, is concentrated on a rather small surface. This feature does not allow the use of this type of followers on existing roofs and floors, or on cantilever roofs, as generally such a concentrated load cannot be placed on existing floors that, by law, allow for a maximum accidental overload lower than the minimum weight of the structure of such a follower.

Photovoltaic panels, in the near-totality of cases, are mounted on a support frame, referred to as "sail", continuously and leaving no gap thereamong. Thus, there are achieved equivalent dimensions of a single panel, with a surface that may range from a minimum of 12 sq m to (currently) a maximum of 130 sq m. Under normal operating conditions, at its apex the sail dual-axis follower rises above land surface from a minimum of 4 m to a maximum of 12 m.

As it will surely be appreciated by a person skilled in the art, an exposed surface of from 12 to 130 sq m. has a wind lift comparable to that of a nautical sail. Lift generated by the presence of winds, even weak ones, forces the tracking system of the follower to position the panel plane horizontally, thereby losing the option of increasing its efficiency with respect to a fixed-type system.

Moreover, the large exposed surface, a peculiar feature of the sail dual-axis follower, constitutes a non-negligible obstacle during the phase of issuance, by the competent body, of authorizations to install them. Undeniably, such a sun follower has an extremely negative impact on the rural and landscape system, as sails' visibility and their on-field (photovoltaic field) distribution can in no way be minimised due to their off-ground height from the land surface. Accordingly, the environmental impact assessment (EIA) that is to be issued by the competent bodies is very often refused.

Finally, each sail dual-axis follower in order to avoid shading should necessarily occupy a minimum surface (based on ground orography) equal to at least thrice the value of the sail surface, i.e., from a minimum of 36 sq m to a maximum of about 400 sq m per individual follower. Therefore, it is necessary to arrange followers in a spotty configuration.

Object of the present invention is to obviate the drawbacks mentioned above with reference to the known art, by providing a device as substantially described in claim 1.

Secondary features of the present invention are instead defined in the respective dependent claims.

The present invention, by overcoming the mentioned problems of the known art, entails several evident advantages.

First of all, the weight of the structure of a sun follower according to the present invention, substantially equal at least to 180 kg, panels included, is always split between two columns, set at a minimum distance of 5 m to each other. Therefore, the maximum concentrated load discharged onto an underlying floor is of 90 kg per column, distributed over a minimum surface of 12 sq m. Accordingly, the load per surface unit is equal to about15 kg/sq m. This feature allows the use of a follower subject-matter of the present invention on existing roofs and floors, or on cantilever roofs, as by law the maximum accidental overload is greater than the weight of the follower structure.

The photovoltaic panels, installed on a follower subject-matter of the present invention, are mounted so as to leave a gap thereamong, on a single frame preferably made of metal, achieving the equivalent dimensions of a single panel having a maximum surface of 7 sq m. Under normal operating conditions, at its apex the follower subject-matter of the present invention rises above land surface from a minimum of 30 cm to a maximum of 200 cm; i.e., it has reference heights remarkably lower than those related to the dual-axis followers known in the state of the art and described in the foregoing.

A maximum exposed surface, ranging from 1.6 to 2 sq m, has a wind lift comparable to that of a rain umbrella. The lift, generated by the presence also of average and average to strong winds (90 km/h) induces a dynamic load increase that may be calculated of about 50 kg with 90 km/h winds. This accidental overload is amply absorbed by the rating of the installed motors. For this reason, the follower system subject-matter of the present invention operates correctly even with 90 km/h average-strong winds, without losing the efficiency increase ability with respect to fixed configurations.

The small exposed surface and, above all, the modest off-ground height from the land surface, comparable to that of a vineyard, a peculiar feature of followers according to the present invention, constitute no obstacle during the phase of issuance of authorizations required for their installation. In fact, the followers according to the present invention are in all equivalent to fixed-configuration systems, both for geometric characteristics of occupied surface and height of the panels off the land surface. The environmental impact assessment (EIA) to be issued by competent bodies can be refused only owing to circumstances out of one's control, not depending on the geometric features of the system. The impact of the followers made according to the present invention on the rural and landscape system is modest and in all equivalent to that of fixed-configuration systems.

To prevent shading, each follower according to the present invention should necessarily occupy a minimum surface (on the basis of ground orography) of at least twice the value of the surface of the installed panels (at most equal to 7 sq m), i.e., from a minimum of 14 sq m to a maximum of about 15 sq m per individual follower. As it will be detailed hereinafter, all followers are installed, preferably systematically, into a lattice structure optimizing the entire occupation surface.

Finally, the sun follower subject-matter of the present invention is characterised by an efficiency increase, with respect to fixed configurations, substantially equivalent to that attainable with sail dual-axis followers, in conjunction with the fact of entailing average-low costs.

Other advantages, features and the operation modes of the present invention will be made apparent from the following detailed description of a preferred embodiment thereof, given by way of example and not for limitative purposes. Reference will be made to the figures of the annexed drawings, wherein:
figures 1 and 5 show in a perspective view a sun follower according to the present invention;
figures 1A-1B-1C, 6 and 7 show in a perspective view details of a follower according to the present invention;
figures 2A-2B show in a perspective view a lattice structure obtained by plural followers according to the present invention, connected in parallel thereamong;
figure 3 shows in a perspective view a lattice structure obtained by plural followers according to the present invention, connected in series thereamong; and
figures 4A-4B depict an exemplary embodiment of the follower subject-matter of the present invention.

The present invention will hereinafter be described making reference to the above-indicated figures.

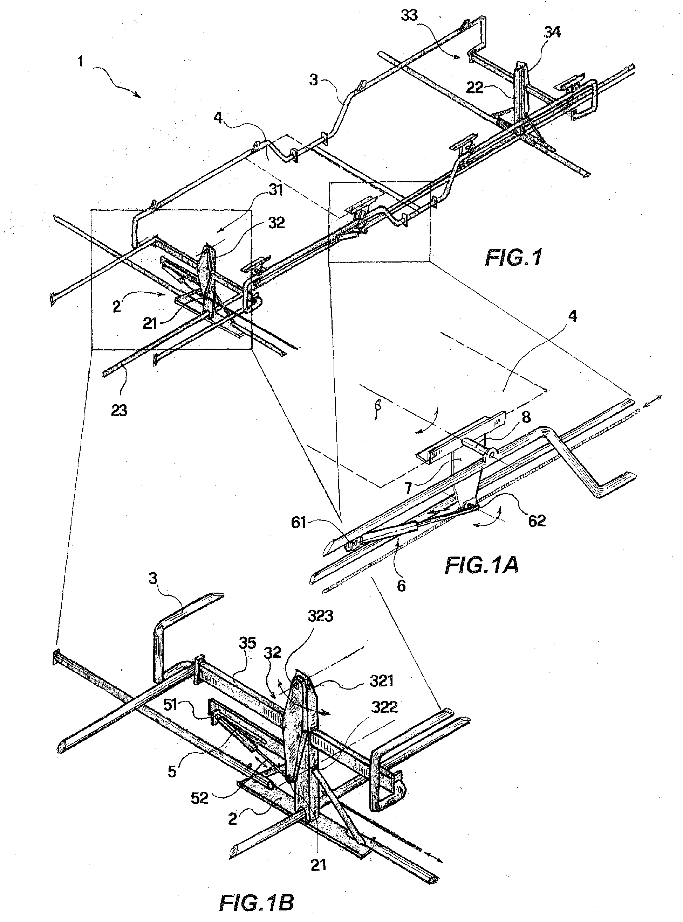

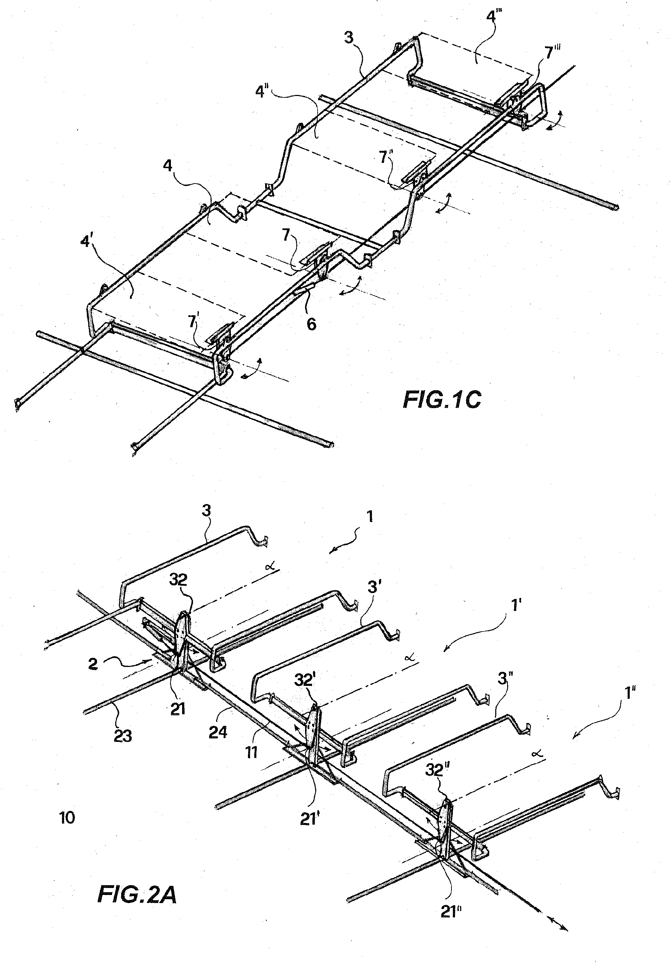

Referring to figure 1, a sun follower 1 subject-matter of the present invention is shown. In particular, the follower 1 comprises a frame 3, made by beams having substantially round sections and on which there are movably connected solar panels, only one of which is schematically and exemplarily depicted in the figure, denoted by reference numeral 4. It is important to stress that the features of the panels will be described with regard to the above-indicated panel 4, it being understood that they are the same for all solar panels present on the follower 1 subject-matter of the present invention.

The frame 3 is supported by a base 2, comprising a first column 21 and a second column 22, said first and second column located at opposite portions of the frame 3. In particular, the frame 3 has a first portion 31 comprising a first plate 32, connected to the first column 21, and a second portion 33 comprising a second plate 34 rotatably connected to the second column 22.

In order to give greater static rigidity to the follower, the base 2 comprises a connecting bar system. In particular, said first and second column 21, 22 are integrally connected therebetween by a connecting bar 23. The base 2 could be made integral to an external plane underlying thereto, such as a flooring, a floor or a ground in general. The external plane will hereinafter be referred to as "land surface". The technical solutions to be adopted in order to implement said integral connection between base 2 and land surface are deemed to be within the reach of a person skilled in the art, and therefore will not be further described hereinafter.

As mentioned, the frame 3 is rotatably connected to the base 2 at said first and second columns 21 and 22. Moreover, the solar panels 4 are connected to the frame 3 in a preferably rotatable manner.

The sun follower, subject-matter of the present invention, comprises first means for moving the solar panels, apt to produce a first motion thereof with respect to the base 2. In particular, the first moving means is preferably interposed between the base 2 and the frame 3, and is apt to produce the first motion of the solar panels, by moving the frame 3 with respect to the base 2.

It will be appreciated that the frame 3 behaves in a manner substantially equivalent to an elastic beam resting at said first and second column. For this purpose, the frame 3 will advantageously be provided with adequate rigidity, so as to contain any deformation that might occur at its center line, in which the bending moment is highest, due to its own weight and accidental overloads, such as wind and snow, as well as during the first motion imparted to the frame by the first moving means, which will be detailed hereinafter.

The sun follower subject-matter of the present invention further comprises second moving means, said second means being apt to produce a second motion of the solar panels with respect to the frame 3, being preferably interposed between the frame 3 itself and the solar panels 4 rotatably mounted thereon.

Referring now to next figure 1B, it is shown a detail of the connection between the frame 3 and the base 2. In particular, the first plate 32, made integral to the frame by means of a rocker arm 35 interposed therebetween, is of a substantially elongate shape, having a top end 321 and a bottom end 322. The first plate 32 is rotatably connected to the first column 21 by a pin 323, integral to the plate 32 and preferably arranged parallelly to the land surface. The pin 323 is inserted into a housing obtained into the first column 21 and provided therein with a bearing (not shown in figure). The frame 3 is connected to the second column, not shown in figure, in an entirely analogous manner. The presence of the bearings arranged in the two columns is useful in order to absorb any structural failure of the frame 3 with respect to the base 2.

The first moving means comprises an actuator 5, having a fixed end 51 integral to the base 2 and a movable end 52 hinged to the first plate 32, substantially at its bottom end 52. The actuator 5 is preferably selected of "linear" type, and moreover it will be moved with the aid of a motor, preferably of electric type. In particular, an AC or DC electric motor could be used. A power-supplied linear actuator is a component well-known in the current state of the art; therefore, the technical contrivances required for a practical implementation thereof will not be further discussed herein.

The frame 3, according to the type of connection with the base 2, is constrained to rotate about a first axis α passing through the pin 323. Therefore, an operation of the actuator 5 will necessary result in a rotation of the frame about said axis.

Referring to figure 1A, the operation of the second moving means is shown in detail. In particular, the panel 4 is integrally connected, at a first end thereof, to a support 7, having it also a substantially elongate shape. The support 7 is, in turn, hinged to the frame by a first pin 8. A second end of the panel 4 (opposite to the first end and not shown in figure) is connected to the frame by a mere hinge engaged by a second pin of the panel. In this case as well, the first and the second pin of the panel 4 are inserted within housings obtained into the frame and preferably provided with bearings (not shown in figure).

The second moving means comprises a second actuator, it also preferably of "linear" type and power-supplied by an electric motor, having a first end 61 integral to the frame 3, and a second end 62 hinged to the support 7. Hence, in a manner entirely analogous to what has been observed for the first linear actuator, an operation of the linear actuator 6 will result in a rotation of the panel 4 with respect to the frame 3 about a second axis β, tilted with respect to said first axis α. Preferably, the two axes α and β are arranged perpendicularly therebetween.

Therefore, evidently a position of the panel 4 with respect to the land surface is attainable by a combination of its first motion of rotation about axis α, obtained by the first moving means, and of its second motion of rotation about axis β, obtained by the second moving means.

Referring now to figure 1C, the second moving means comprises internal connecting means, apt to make integral the solar panels arranged along the frame 3 and advantageously making necessary the use of a single actuator 6 per each follower. In particular, the internal connection means comprises, by way of a nonlimiting example, an internal crossbar 9. The internal crossbar 9 is apt to connect the support 7 related to the panel 4 with supports 7', 7", 7''', respectively connected to panels 4', 4" and 4"'. Therefore, it will be appreciated that the use of the crossbar 9 makes the second motions of rotation of each panel synchronous thereamong.

Referring to figure 2A, there can be seen a lattice structure 10, made by the in parallel connection of plural sun followers subject-matter of the present invention. In figure the lattice structure comprises three followers, yet of course it could comprise any number of them, on the basis of design requirements and specific application scenario.

In particular, it can be seen that the connecting bar system comprises a connecting bar 24, apt to make the first column 21 integral to successive first columns 21' and 21" of respective sun followers 1' and 1".

The lattice structure 10 comprises an external crossbar 11, apt to connect the plate 32 related to the follower 1 to successive plates 32' and 32" respectively related to followers 1' and 1". Analogously to the above-described internal crossbar, the external crossbar 11 makes synchronous the first motions of each frame about the respective axis α, and accordingly of all panels (not shown) mounted thereon.

Thus, it is advantageously possible to limit the number of the first linear actuators needed to produce the first motion of rotation of the frame about axis α.

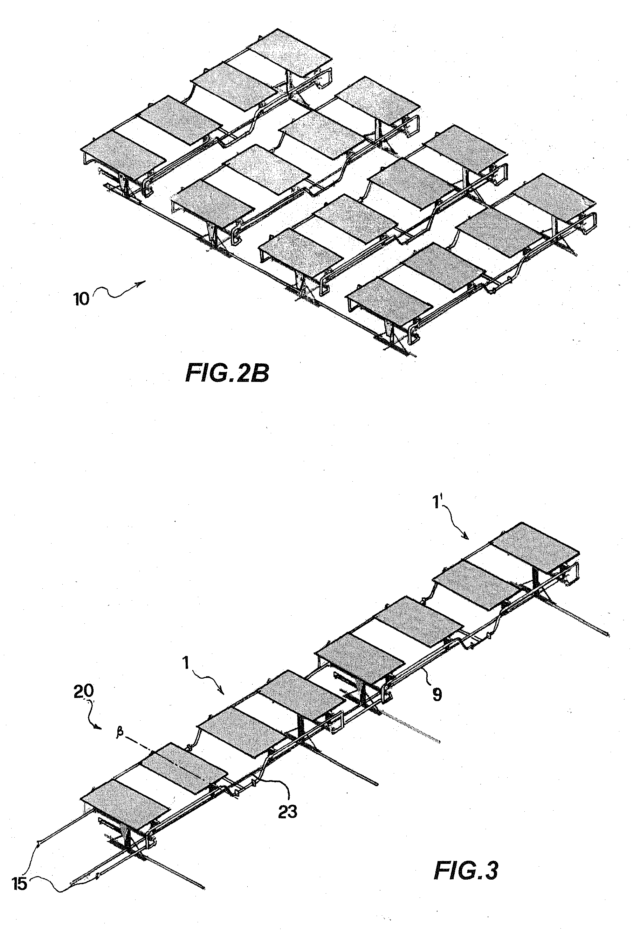

Referring to figure 2B, there can be seen the lattice structure 10 having four sun followers connected in parallel thereamong, and in which also the solar panels mounted thereon are depicted.

Referring to figure 3, there can be seen a lattice structure 20 in which, e.g., two sun followers 1 and 1' are connected in series therebetween. However, it will be appreciated that any number of followers could be connected in series. In particular, the in series connection of two followers occurs by the connection between respective connecting forks 15, obtained onto the frame of each follower. Moreover, in this case the connecting bar 23 integrally connects all columns of the followers. It will be appreciated that the connecting bar 23 could be made by a single bar, or it could be obtained by the rigid connection of plural bar portions. The selection of the best technical solution is deemed to be within the reach of a person skilled in the art, and will not be delved into hereinafter.

Lastly, in order to make synchronous the second motions of all panels of the two followers, they are advantageously connected through the internal crossbar 9. Therefore, the crossbar 9 runs along an entire longitudinal development of the lattice structure 20, connecting thereamong the supports of each panel and making synchronous their motions of rotation about the respective axis β.

Hence, it follows that complex lattice structures could be made, carrying out in series and/or in parallel connections of followers and therefore obtainable as combinations of above-described lattice structures 10 and 20.

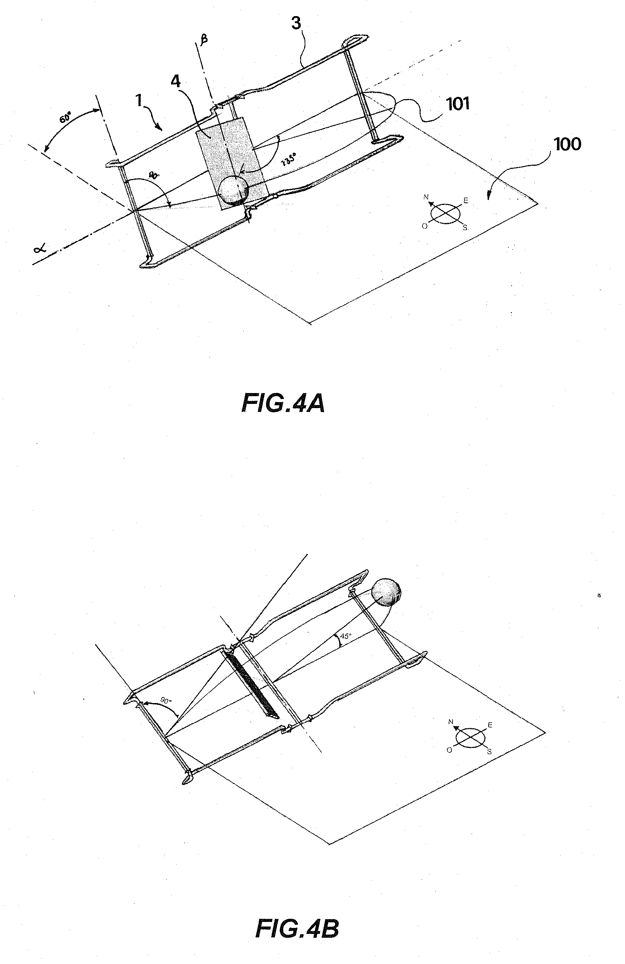

Referring now to figures 4A and 4B, there is depicted an example of how the Sun following is carried out by a sun follower according to the present invention.

Reference is made to the follower 1 in figure, yet evidently the following holds true for any follower being part of a lattice structure as better described hereto.

The frame 3 of the follower is initially positioned onto the land surface, denoted in figure by reference numeral 100, with a longitudinal side arranged perpendicularly to the geographic South. The frame is rotated about axis α so as to arrange it perpendicularly to an ecliptic plane 101. Then, the panel 4 is rotated about axis β, parallel to a North-South axis, in a manner such as to arrange it always orthogonal to a solar axis, during a full East-West solar excursion. In figures 4A and 4B there are reported by way of example solar tracking instants, respectively related to Winter-afternoon and Spring-morning periods.

It will be appreciated that the follower subject-matter of the present invention will preferably be equipped with a system for the control and actuation of said first and second moving means. In particular, the control and actuation system will be such as to move the disclosed actuators in a manner such as to carry out the Sun following as substantially disclosed in the described figures 4A and 4B. The implementation of such a system is deemed to be within the reach of a person skilled in the art, and therefore it will not be further described hereinafter.

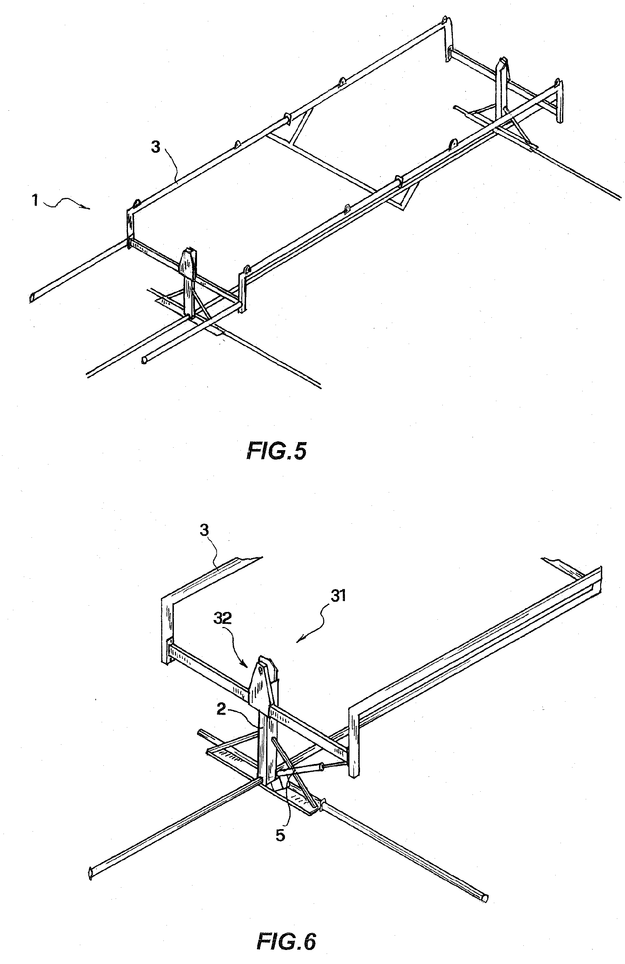

Referring to figure 5, a variant embodiment of the frame 3 is depicted. Said frame, as is evident in the figure, is made by beams having a substantially square section, rather than a round one. As it will be appreciated by a person skilled in the art, thus it is possible to reduce the manufacturing cost thereof.

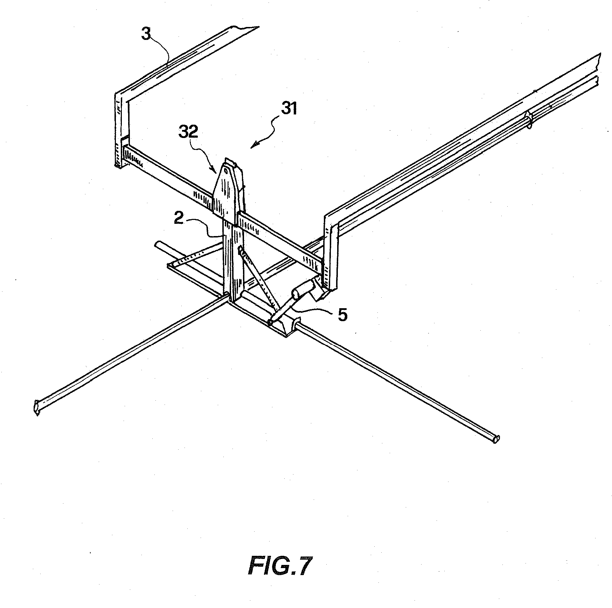

Lastly, referring to the last figures 6 and 7, there are depicted two mounting variants of the linear actuator 5 interposed between the frame 3 and the base 2. In particular, it will be appreciated that by such mounting variants it is not required anymore for the plate 32 to have an elongate shape, as the actuator 5 directly moves the frame 3. Thus, a constructive advantage is clearly attained, as the first plates 32 used at the portion 31 could advantageously be identical to the second plates positioned at the second portion of the follower (not shown in the figures). Moreover, by mounting the actuator 5 on the positions shown in the figures, it is advantageously improved the moving dynamics of the frame 3, thereby attaining, motion imparted to the frame 3 being equal with respect to the configuration shown above, a lesser energy expenditure.

The present invention has hereto been described with reference to a preferred embodiment thereof. It is understood that other embodiments might exist, all falling within the concept of the same invention, and all comprised within the protective scope of the claims hereinafter.

## Claims

1. A sun follower (1) comprising:
• a base (2);
• a frame (3), movably connected to said base (2);
• at least one solar panel (4, 4'), movably connected to said frame (3);
• first means (5) for moving said at least one solar panel (4) apt to produce a first motion thereof with respect to said base (2);
said sun follower (1) being **characterised in that** it comprises second moving means (6) apt to produce a second motion of said at least one solar panel (4) with respect to said frame (3).

2. The sun follower (1) according to the preceding claim, wherein said first moving means (5) is interposed between said frame (3) and said base (2), said first moving means (5) being apt to move said frame (3) with respect to said base (2).

3. The sun follower (1) according to one of the preceding claims, wherein said second moving means (6) is interposed between said at least one panel (4) and said frame (3).

4. The sun follower (1) according to one of the preceding claims, wherein said frame (3) is rotatably connected to said base (2).

5. The sun follower (1) according to any one of the preceding claims, wherein said first (5) and second (6) moving means is apt to move said at least one panel (4, 4') about respective axes (α, β) tilted therebetween.

6. The sun follower (1) according to one of the preceding claims, wherein said base (2) comprises a first column (21), to which said frame (3) is connected substantially at a first portion thereof (31).

7. The sun follower (1) according to one of the preceding claims, wherein said base (2) comprises a second column (22) to which said frame (3) is connected at a second portion (33) thereof.

8. The sun follower (1) according to claim 6, wherein said first portion (31) of said frame (3) comprises a first plate (32) rotatably connected to said first column (21).

9. The sun follower (1) according to claim 7, wherein said second portion (33) comprises a second plate (34) rotatably connected to said second column (22).

10. The sun follower (1) according to claim 8, wherein said first plate (32) has a substantially elongate shape having a top end (321) and a bottom end (322).

11. The sun follower (1) according to the preceding claim, wherein said first plate (32) is rotatably connected to said first column (21) at said top end (321).

12. The sun follower (1) according to claims 10 or 11, wherein said first moving means (5) comprises a first linear actuator (5) having a movable end (52) hinged to said first plate (32) substantially at said bottom end (322), and a fixed end (51) integral to said base (2).

13. The sun follower (1) according to any one of the preceding claims, wherein said at least one panel (4, 4') is rotatably connected to said frame (3).

14. The sun follower (1) according to the preceding claim, wherein said at least one panel (4, 4') is integral at a first end thereof to a support (7), said support (7) having a substantially elongate shape.

15. The sun follower (1) according to the preceding claim, wherein said second moving means (6) comprises a second actuator (6), having a first fixed end (61) integral to said frame (3) and a second movable end (62) hinged to said support (7).

16. The sun follower (1) according to any one of the preceding claims, wherein said second moving means (6) comprises internal connecting means (9) apt to make said at least one panel (4) integral to one or more panels (4', 4") successive thereto, said one or more panels (4', 4") being arranged along said frame (3).

17. The sun follower (1) according to any one of the preceding claims, further comprising a system for the control and actuation of said first (5) and second (6) moving means.

18. A lattice structure (10, 20), **characterised in that** it comprises two or more solar followers (1, 1') according to any one of the preceding claims, connected in series and/or parallel therebetween and in a manner such that said first and second motion of the solar panels (4, 4') be synchronous therebetween.
